# EUROPEAN PATENT SPECIFICATION

(11) **EP 3 513 988 B1**
(45) Date of publication and mention of the grant of the patent: **09.12.2020**
(21) Application number: 19152414.9
(22) Date of filing: 17.01.2019
(51) Int. Cl.: B60C 1/00, C08L 9/06, C08L 25/16, C08K 5/103, C08K 3/04, C08K 3/06, C08K 5/548

(54) **RUBBER COMPOSITION AND TIRE WITH TREAD CONTAINING VEGETABLE OIL EXTENDED HIGH TG STYRENE/BUTADIENE ELASTOMER AND TRACTION RESIN**
KAUTSCHUKZUSAMMENSETZUNG UND REIFEN MIT LAUFFLÄCHE, DIE HOCH TG STYROL/BUTADIENELASTOMER ENTHÄLT, DAS MIT PFLANZLICHEM ÖL VERLÄNGERT IST, UND TRAKTIONSHARZ
COMPOSITION DE CAOUTCHOUC ET PNEUMATIQUE AYANT UNE BANDE DE ROULEMENT CONTENANT UN ÉLASTOMÈRE DE STYRÈNE/BUTADIÈNE HAUTE TG ÉTENDU À L'HUILE VÉGÉTALE, ET DE LA RÉSINE DE TRACTION

(30) Priority: 22.01.2018 US 201815876471
(43) Date of publication of application: 24.07.2019
(73) Proprietor: The Goodyear Tire & Rubber Company, Akron, OH 44316 (US)
(72) Inventor: WEYDERT, Marc, 8064 Bertrange (LU); DELVILLE, Jerome, 54430 Rehon (FR); MEYER, Mathias, 54317 Gutweiler (DE); WESTERMANN, Stephan Franz, 54292 Trier (DE); MILAN, Marie-Laure Stéphanie, 8077 Bertrange (LU)
(74) Representative: Kutsch, Bernd

(56) References cited:
- EP-A1- 2 433 812
- EP-A1- 2 460 670
- EP-A1- 2 657 262

## Description

### Field of the Invention

This invention relates to a rubber composition and to a tire with a high-performance tread rubber composition for promoting tread durability and traction. For such purpose, a tread rubber composition is provided which contains a relatively high Tg solvent solution polymerization prepared styrene/butadiene elastomer (SSBR) together with silica, preferably precipitated silica reinforcement and a traction promoting resin. The invention includes extension of the uncured high Tg SSBR with a triglyceride vegetable oil.

### Background of the Invention

Tires are sometimes desired which have high performance treads which promote traction and durability.

It is desired to provide tread rubber containing a relatively high Tg (high glass transition temperature property) solvent solution polymerization prepared styrene/butadiene rubber (SSBR) to promote wet traction for the tread rubber composition.

For such purpose, it is desired for the SSBR to have a Tg of at least -20°C and desirably in a range of from -20°C to +10°C. It is desired for the high Tg SSBR to have a bound styrene content in a range of from 25 to 50, alternately from 25 to 40, percent. It is further desired for the relatively high Tg SSBR to have a vinyl 1,2-content based on its polybutadiene portion of at least 10, alternately in a range of from 10 to 80, or alternatively in a range of from 20 to 70, percent.

The reinforcing filler for such rubber composition is desired to comprise a combination of rubber reinforcing carbon black and silica, preferably precipitated silica (amorphous synthetic precipitated silica) or preferably composed primarily of precipitated silica, desirably at least 50 to 100, alternately 70 to 99 weight percent precipitated silica. The reinforcing filler also contains a silica coupler (silica coupling agent) for the silica.

Historically, such relatively high Tg SSBR's may be extended with petroleum based rubber processing oil at the SSBR manufacturing facility by blending the petroleum oil with an SSBR polymerizate (polymerization cement comprising the relatively high Tg SSBR and solvent used for its preparation by polymerization of styrene and 1,3-butadiene monomers) prior to recovery of the SSBR from its polymerizate and thereby prior to blending the SSBR with rubber compounding ingredients at a tire tread manufacturing facility, although additional petroleum based rubber processing oil may thereafter be blended with the SSBR containing rubber composition which may sometimes be referred to as "free addition" of the petroleum based oil instead of such "extending" of the high Tg SSBR.

The term "extending", as above indicated, is used to refer to (to describe) pre-blending of the petroleum based oil with the relatively high Tg SSBR (a relatively high viscosity, relatively high molecular weight SSBR) in a relatively low viscosity solvent based cement form of the SSBR. A composite of the petroleum based oil and SSBR is thereafter recovered from the solvent cement (by removing the solvent) as a petroleum based oil "extended" SSBR. The oil extended relatively high Tg SSBR is provided in contrast to free addition of the petroleum based oil to a significantly higher viscosity SSBR or to the SSBR containing rubber composition by addition of the petroleum oil to a rubber mixer.

For this invention, it is desired to provide a rubber composition preferably comprising cis 1,4-polybutadiene rubber and the relatively high Tg SSBR to promote the tire tread traction yet it is also desired to reduce the Tg of the rubber composition to promote the tread traction at lower temperatures by thereby reducing its stiffness as may be evidenced by a reduction of its storage modulus (E'). For such reduction in Tg of the rubber composition, it desired to evaluate providing the relatively high Tg SSBR in a form of an extended SSBR with vegetable triglyceride oil in a sense of pre-blending the vegetable oil with the relatively high Tg SSBR before recovery from its polymerization cement, instead of the SSBR being extended with petroleum based oil, to thereby evaluate promoting a lower Tg for the rubber composition containing the relatively high Tg SSBR to thereby promote a reduction of its stiffness (e.g. lower storage modulus G' and higher tan delta values for the rubber composition).

Historically, a vegetable oil such as for example soybean oil, or soy oil, has been used for mixing with various rubber compositions by free oil addition to the rubber composition rather than soy oil extension of the elastomer by addition to its cement at its point of manufacture. For example, see US-B-7,919,553, US-B-8,100,157 and US-B-8,022,136. Soybean oil has also been used for oil extending emulsion polymerization prepared and organic solution polymerization prepared styrene/butadiene elastomers for some circumstances. For example, see US-B-8,044,118 and US-A- 2013/0289183.

In the description of this invention, the terms "compounded" rubber compositions and "compounds" where used refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

The glass transition temperature (Tg) of elastomers is determined as a peak midpoint by a differential scanning calorimeter (DSC) at a temperature rate of increase of 10ºC per minute according to ASTM D7426-08 (2013).

A reference to a cis-1,4-polybutadiene or a cis 1,4-polyisoprene means a polybutadiene or polyisoprene respectively having at least 90 percent cis-content, preferably at least 92 percent cis-content or at least 95 percent cis-content.

### Summary and Practice of the Invention

The invention relates to a rubber composition in accordance with claim 1 and to a tire in accordance with claim 15.

Dependent claims refer to preferred embodiments of the invention.

In accordance with a preferred aspect of this invention, a pneumatic tire is provided having a rubber tread having a running surface intended to be ground-contacting, where said tread comprises a rubber composition comprising, based on parts by weight per 100 parts by weight elastomer (phr):
(A) one or more conjugated diene-based elastomers comprising:
   (1) from 75 to 100, alternately 80 to 95, phr of (a relatively high Tg) styrene/butadiene elastomer (SSBR) pre-oil extended with vegetable triglyceride oil, wherein said SSBR has a Tg in a range of from -20°C to +10°C and a bound styrene content in a range of from 25 to 50 percent,
   (2) from zero to 25, alternately from 5 to 20, phr of at least one additional conjugated diene-based elastomer comprising at least one of polybutadiene, cis 1,4-polyisoprene rubber, and additional styrene/butadiene elastomer, desirably a relatively high cis 1,4-polybutadiene rubber having a cis 1,4- isomeric content of at least 92 percent,
(B) 80 to 200, alternately from 90 to 140, phr of a reinforcing filler comprising a combination of rubber reinforcing carbon black and silica, preferably precipitated silica, where the reinforcing filler comprises from 50 to 100 weight percent of silica or precipitated silica, where said reinforcing filler further contains a silica coupler (silica coupling agent) for said silica having a moiety reactive with hydroxyl groups on said silica and another different moiety interactive with said diene-based elastomers; and
(C) 10 to 70, alternately 15 to 50, phr of a traction promoting resin (e.g. traction between said tread and ground) comprising at least one of styrene/alphamethylstyrene copolymer resin, terpene-phenol resin, coumarone-indene resin, petroleum hydrocarbon resin, terpene polymer resin, and rosin derived resin and modified rosin acid resin, desirably comprising styrene/alphamethylstyrene resin.

In one embodiment, the SSBR is extended with 5 to 40, alternately 5 to 30, parts by weight vegetable triglyceride oil per 100 parts by weight of said high Tg SSBR.

In one embodiment, the SSBR has a vinyl 1,2-content, based on its polybutadiene component, in a range of from 10 to 80, alternately 20 to 70, percent.

In one embodiment, said rubber composition contains from zero to 20, alternately up to 10 or up to 20, phr of freely added petroleum based oil (in contrast to containing petroleum based oil extended relatively high Tg SSBR).

In one embodiment, said rubber composition contains from 0 to 10, alternately up to 5 or up to 10, phr of phenol formaldehyde resin to promote tack for the rubber composition.

In one embodiment said traction promoting resin comprises at least one of said styrene/alphamethylstyrene resin, rosin acid resin, coumarone-indene resin and terpene-phenol resin, desirably styrene/alphamethylstyrene resin.

In one embodiment, said triglyceride vegetable oil is at least one of sunflower oil, rapeseed oil, canola oil, palm oil, and soybean oil, desirably comprised of at least one of soybean oil and sunflower oil.

In one embodiment, said high Tg SSBR is an end-functionalized high Tg SSBR with at least one functional group reactive with hydroxyl groups on said precipitated silica where said functional groups comprises at least one of alkoxy, amine, siloxy and thiol groups.

In one embodiment, said SSBR or end functionalized SSBR is tin or silicon coupled.

In further accordance with this invention, said tire tread is provided as a sulfur cured rubber composition.

Various suitable solvent solution polymerization methods for preparing a relatively high Tg SSBR by co-polymerizing styrene and 1,3-butadiene monomers are known in the art, for example, as may be disclosed in one or more of US-A-4,843,120; US-A-5,137,998; US-A-5,047,483; US-A-5,272,220; US-A-5,239,009; US-A-5,061,765; US-A-5,405,927; US-A-5,654,384; US-A-5,620,939; US-A-5,627,237; US-A-5,677,402; US-B-6,103,842; and US-B-6,559,240.

The silica or precipitated silica may, for example, be characterized by having a BET surface area, as measured using nitrogen gas, in the range of, for example, 40 to 600, and more usually in a range of 50 to 300, square meters per gram. The BET method of measuring surface area might be described, for example, in the Journal of the American Chemical Society, Volume 60, as well as ASTM D3037.

The silica may, for example, also be characterized by having a dibutylphthalate (DBP) absorption value, for example, in a range of 100 to 400, and more usually in a range of from 150 to 300, cc/100g.

Various commercially available silicas may be used, such as, and not intended to be limiting, silicas from PPG Industries under the Hi-Sil trademark with designations 210 anf 243; silicas from Solvey with, for example, designations of Zeosil 1165MP and Zeosil 165GR; silicas from Evonik with, for example, designations VN2 and VN3; and chemically treated precipitated silicas (e.g. composite of pre-hydrophobated precipitated silica) such as for example Agilon™ 400 from PPG Industries.

Representative examples of rubber reinforcing carbon blacks are, for example, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

The silica coupling agent(s) which may be provided with the precipitated silica for the rubber composition, may comprise, for example,
(A) bis(3-trialkoxysilylalkyl) polysulfide containing an average of connecting sulfur atoms in its polysulfide bridge in range of from 2 to 4, alternately from 2 to 2.6, sulfur atoms, or
(B) a combination of bis(3-trialkoxysilylproyl) polysulfides having an average of connecting sulfur atoms in their polysulfide bridges of:
   (1) from 2 to 2.6, and
   (2) from 3.2 to 4,
(C) an organoalkoxymercaptosilane, or
(D) a combination of said bis(3-trialkoxysilylalkyl) polysulfide and organoalkoxymercaptosilane silica coupling agents.

Representative of such bis(3-trialkoxysilylalkyl) polysulfide is bis(3-triethoxysilylpropyl) polysulfide.

Alternately, the silica or precipitated silica may be pre-treated (pre-hydrophobated) with at least one of such silica coupling agent to form a composite thereof prior to addition to the rubber composition.

It is readily understood by those having skill in the art that the vulcanizable rubber composition would be compounded by methods generally known in the rubber compounding art, such as, for example, mixing various additional sulfur-vulcanizable elastomers with said SSBR composite and various commonly used additive materials such as, for example, sulfur and sulfur donor curatives, sulfur vulcanization curing aids, such as activators and retarders and processing additives, resins including tackifying resins and plasticizers, petroleum based or derived process oils as well as vegetable triglyceride oil in addition to said triglyceride oil extended SSBR, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of processing aids comprise 1 to 50 phr. Additional process oils, if desired, may be added during compounding in the vulcanizable rubber composition in addition to the extending soybean oil contained in the soybean oil extended SSBR. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 2 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the pneumatic tire of the present invention may be generally carried out at conventional temperatures in a range of, for example, from 150°C to 200°C. Any of the usual vulcanization processes may be used such as heating in a press or mold with superheated steam or hot air. Such tires can be built, shaped, molded and cured by various methods which are known and will be readily apparent to those having skill in such art.

The following examples are presented for the purposes of illustrating the present invention. The parts and percentages are parts by weight, usually parts by weight per 100 parts by weight rubber (phr), unless otherwise indicated.

### EXAMPLE I

In this example, three rubber compositions are evaluated. All three rubber compositions contained 10 phr of relatively high cis 1,4-polybutadiene rubber.

The first rubber composition of Control rubber Sample A represents a proposed high performance silica reinforced tread rubber composition containing two styrene/butadiene elastomers (SSBR's) having Tgs of -14°C and -31°C respectively with a mathematical average Tg of the combination of SSBR's of an intermediate Tg of -23°C.

For the second rubber composition of Experimental rubber Sample B, the silica reinforced rubber composition contained two styrene/butadiene elastomers (SSBRs) having Tgs of -14°C and -2°C respectively with a mathematical average Tg of the combination of SSBR's of a higher Tg of -18°C.

The SSBRs of both of the rubber compositions of Control rubber Sample A and Experimental rubber Sample B were provided as SSBRs pre-extended with petroleum based rubber processing oils.

A small amount of petroleum based rubber processing oil (5 phr thereof) was also freely added to the rubber compositions of Control rubber Sample A and Experimental rubber Sample B.

For the third rubber composition of Experimental rubber Sample C, the petroleum based oil was replaced with soybean oil to provide a vegetable oil extended high Tg SSBR. A small amount (5 phr) of petroleum based rubber processing oil was also freely added to (mixed with) the rubber composition. The high Tg SSBR (before its soybean oil extension) had a higher Tg of -14°C compared the average Tgs of the SSBRs of Control rubber Sample A and Experimental rubber Sample B of -23°C and -18°C, respectively.

The compositions of the rubber Samples are summarized in Table 1 where the parts of ingredients are expressed in terms of parts by weight per 100 parts by weight elastomer(s), (phr) unless other noted.

**Table 1**

| Materials | | Rubber Samples (phr) | |
|---|---|---|---|
| | Control A | Experimental B | Experimental C |
| Non-Productive Mixing Steps | | | |
| cis 1,4-polybutdiene¹ | 10 | 0 | 0 |
| cis 1,4-polybutadiene² | 0 | 10 | 10 |
| SSBR(1), petroleum oil extended³ (50 parts SSBR, 19 parts oil) | 69 | 69 | 0 |
| SSBR(2), petroleum oil extended⁴ (40 parts SSBR, 15 parts oil) | 0 | 55 | 0 |
| SSBR(3), petroleum oil extended⁵ (40 parts SSBR, 15 parts oil) | 55 | 0 | 0 |
| SSBR(4), soybean oil extended⁶ (90 parts SSBR, 18 parts oil) | 0 | 0 | 108 |
| Precipitated silica⁷ | 106 | 112 | 112 |
| Carbon black(N134)⁸ | 5 | 0 | 0 |
| Silica coupler⁹ | 10 | 11 | 11 |
| Petroleum processing oil¹⁰ | 6 | 5 | 5 |
| Coumarone-indene resin¹¹ | 6 | 0 | 0 |
| Styrene/alphamethylstyrene resin¹² | 0 | 12 | 12 |
| Phenol formaldehyde resin¹³ | 0 | 5 | 5 |
| White gum resin¹⁴ | 0 | 3 | 3 |
| Fatty acid¹⁵ | 2.5 | 0 | 0 |
| Microcrystalline wax | 2 | 2 | 2 |
| Antioxidant | 5 | 5 | 5 |
| Zinc fatty acid processing aid¹⁶ | 2 | 3 | 3 |
| | | | |

| Productive Mixing Step | | | |
|---|---|---|---|
| Zinc oxide | 3 | 1 | 1 |
| Silica coupler¹⁷ | 2 | 2 | 2 |
| Sulfur | 2 | 1 | 1 |
| Sulfur vulcanization accelerators¹⁸ | 6 | 6 | 4 |

| | | | |
|---|---|---|---|
| ¹cis 1,4-polybutadiene rubber having a cis 1,4-content of at least 95 percent and a Tg of -104°C as BUD1207™ from The Goodyear Tire & Rubber Company prepared by nickel based catalysis of 1,3-butadiene monomer ²cis 1,4-polybutadiene rubber having a cis 1,4-content of at least 95 percent and a Tg of -104°C as BUD1223™ from The Goodyear Tire & Rubber Company prepared by neodymium based catalysis of 1,3-butadiene monomer. ³Solution polymerization prepared styrene/butadiene elastomer (SSBR), extended with 37.5 parts by weight petroleum based rubber processing oil per 100 parts by weight of SSBR, where the SSBR has a moderate Tg of -31°C and a styrene content of 40 percent and a vinyl 1,2-content based on its polybutadiene component of 24 percent as SLR6430™ from the Trinseo Company. The SSBR is reported in Table 1 in terms of the oil extended SSBR (SSBR containing the petroleum oil extension). ⁴Solution polymerization prepared styrene/butadiene elastomer (SSBR), extended with 37.5 parts by weight petroleum based rubber processing oil per 100 parts by weight of SSBR, where the SSBR has a high Tg of -2°C and a styrene content of 40 percent and a vinyl 1,2-content based on its polybutadiene component of 65 percent as SE6233™ from the Sumitomo Company. The high Tg SSBR is reported in Table 1 in terms of the oil extended SSBR (SSBR containing the petroleum oil extension). ⁵Solution polymerization prepared styrene/butadiene elastomer (SSBR), extended with 37.5 parts by weight petroleum based rubber processing oil per 100 parts by weight of SSBR, where the SSBR has a high Tg of -14°C and a styrene content of 34 percent and a vinyl 1,2-content based on its polybutadiene component of 58 percent as E680™ from the Asahi-Kasei Company. The SSBR is reported in Table 1 in terms of phr of the oil extended SSBR (SSBR containing the petroleum oil extension). ⁶Solution polymerization prepared styrene/butadiene elastomer (SSBR), extended with 20 parts by weight soybean oil per 100 parts by weight of SSBR, where the SSBR has a high Tg of -14°C and a styrene content of 33 percent and a vinyl 1,2-content based on its polybutadiene component of 54 percent as SLF33SOY from The Goodyear Tire & Rubber Company. The SSBR is reported in Table 1 in terms of the soybean oil extended SSBR (SSBR containing the soybean oil extension). ⁷Precipitated silica having a nitrogen surface area of 210m² as Zeosil Premium 200MP™ silica from the Solvay Company ⁸Rubber reinforcing carbon black as N134, an ASTM designation ⁹Silica coupler as a bis(3-triethoxysilylpropyl) polysulfide having an average of from 2 to 2.6 connecting sulfur atoms in its polysulfidic bridge as Si266™ from Evonik ¹⁰Petroleum based rubber processing oil comprised primarily of TDAE oil ¹¹Coumarone-indene resin having a softening point of 100°C ¹²Styrene/alphamethylstyrene resin having a styrene content of 45 percent and a softening point of 85°C ¹³Phenol formaldehyde resin as SP1068™ from the SI Group ¹⁴White gum resin from AV Pound, a rosin based resin ¹⁵Fatty acid comprised of a combination of at least one of stearic, palmitic and oleic acids ¹⁶Rubber processing aid, fatty acid based, compriseing zinc salt of fatty acid as EF44™ from Schill & Seilacher Company ¹⁷Silica coupler comprising bis(3-triethoxysilylpropyl) polysulfide with an average in a range of 3.4 to 4 connecting sulfur atoms in its polysulfidic bridge as Si69™ from Evonik Company contained on a carbon black carrier in a 50/50 ratio thereof as X-50-S™ ¹⁸Sulfur vulcanization accelerators comprised of sulfenamide and diphenylguanidine. | | | |

The non-productive mixing (NP) of the rubber compositions for Control rubber Sample A and Experimental rubber Sample C was comprising two ingredient addition mixing stages and two re-milling mixing stages without ingredient addition followed by a final productive (P) mixing stage where the sulfur and vulcanization accelerators were added. For Experimental rubber Sample B, only one re-milling mixing stage was used.

In Table 2 various physical properties of the rubber compositions of Control rubber Sample A and Experimental rubber Samples B and C are reported. The rubber samples were cured at a temperature of 170°C for 10 minutes.

**Table 2**

| | Rubber Samples (phr) | | |
|---|---|---|---|
| | Control A | Experimental B | Experimental C |
| cis 1,4-polybutadiene rubber | 10 | 10 | 10 |
| SSBR(1) extended with petroleum oil | 50 | 50 | 0 |
| SSBR(2) extended with petroleum oil | 0 | 0 | 0 |
| SSBR(3) extended with petroleum oil | 40 | 40 | 0 |
| SSBR(4) extended with soybean oil | 0 | 0 | 90 |
| Rebound. Zwick (%) | | | |
| Rebound at 0°C | 8.6 | 8 | 8.6 |
| Rebound at 100°C | 53 | 54 | 49 |
| | | | |
| Rubber Properties | | | |
| Ultimate elongation (%) 4 | 458 | 482 | 462 |
| Tensile strength (MPa) | 83 | 91 | 76 |
| | | | |
| Modulus. Ring | | | |
| 100 percent (MPa) | 2.2 | 2.3 | 2.2 |
| 300 percent (MPa) | 9.9 | 9.9 | 8.9 |
| | | | |
| Shore A Hardness | 68 | 74 | 74 |
| Rebound, at 23°C, (%) | 21 | 16 | 21 |
| | | | |
| Average polymer matrix Tg (calculated) (Tg based on Fox equation, a well-known equation to those having skill in such art) | -31.5°C | -26.7°C | -23°C |
| Rubber composition Tg (at a maximum tan delta of a tan delta instrumental sweep test) | -19.2°C | -13.4°C | -20.1 °C |
| E' at 0°C (MPa)¹ | 41.7 | 62.7 | 45.2 |
| E' at 30°C (MPa)¹ | 20.1 | 21.3 | 21.6 |

| | | | |
|---|---|---|---|
| ¹Modulus (E') determined by Eplexor™ instrument (an instrument of the Gabo Company) | | | |

From Table 2 it can be seen that the physical properties of the rubber compositions fall within a similar and acceptable range of physical values for each of the Control and Experimental rubber samples. Therefore, performances of the rubber compositions can be reasonably compared in terms of their tensile strength, elongation and modulus properties as well as Shore A hardness values.

However, from Table 2, the Tg values for the polymer matrix and rubber composition are observed as tabulated in the following Table 3 where the rubber composition Tg containing the increased polymer matrix Tg of -23°C surprisingly decreased to a value of -20.1 °C for Experimental rubber Sample C employing the high Tg SSBR which was pre-soybean oil extended.

**Table 3**

| | Control A | Experimental B | Experimental C |
|---|---|---|---|
| Polymer matrix Tg | -31.5°C | -26.7°C | -23°C |
| Rubber composition Tg | -19.2°C | -13.4°C | -20.1 °C |
| E' at 0°C (MPa) | 41.7 | 62.7 | 45.2 |
| E' at 30°C (MPa) | 20.1 | 21.3 | 21.6 |

From Table 3 it is seen that, where the polymer matrix Tg of -26.7°C for Experimental rubber Sample B was significantly higher than the polymer matrix Tg of -31.5°C for Control rubber Sample A, it would be expected that rubber Experimental rubber Sample B would provide a predictive and beneficially improved wet grip (wet traction) for the running surface of a tire tread of rubber composition.

However, such increase of polymer matrix Tg for Experimental rubber Sample B compared to the polymer matrix Tg of Control rubber Sample A was accompanied by a higher rubber composition Tg of -13.4°C compared to a rubber composition Tg of -19.2°C for Control rubber Sample A. Therefore, Experimental rubber Sample B is expected to stiffen more than Control rubber Sample A at low ambient temperatures, which in turn would negatively affect the wet grip (traction) performance of the tire tread of such rubber composition at low ambient temperatures.

In contrast, Experimental rubber Sample C, containing the soybean oil extended high Tg SSBR with a polymer matrix Tg of -23°C, reported a Tg of -20.1 °C for its rubber composition.

Therefore, although Experimental rubber Sample C containing the soybean oil extended high Tg SSBR reported a beneficial higher polymer matrix Tg value of -23°C compared to the polymer matrix Tg of -31.5°C for Control rubber Sample A, it is surprisingly seen that the rubber composition Tg of -20.1°C for Experimental rubber Sample C was comparable to the rubber composition Tg of -19.2°C for Control rubber Sample A.

This is considered to be a beneficial discovery in a sense of that such higher polymer matrix Tg (-23°C) would be expected to provide a beneficially improved wet grip (wet traction) for the running surface of a tire tread of Experimental rubber Sample C compared to Control rubber Sample A. Also, the comparatively lower rubber composition Tg (-20°C) of Experimental rubber Sample C would be expected to enable

Experimental rubber Sample C to avoid the low temperature stiffening of the rubber composition thereby maintaining the wet grip (wet traction) at lower ambient temperatures.

Therefore, a tire tread of the rubber composition of Experimental rubber Sample C is expected to display improved wet grip performance at higher ambient temperatures without significant loss of wet grip (wet traction) at lower ambient temperatures. This expectation is illustrated by the stiffening behavior (E' values) of the rubber compositions at a lower temperature of 0°C as compared to a higher temperature of 30°C. For example, all three rubber compositions (Control rubber Sample A and Experimental rubber Samples B and C) have similar dynamic stiffness E' values at 30°C ranging from 20.1 to 21.6 MPa. However, Experimental rubber Sample B stiffens significantly more at lower ambient temperatures (e.g. 0°C) than either of Control rubber Sample A or Experimental rubber Sample C with a substantially greater value of 62.7 MPa as compared to values of 41.7 and 45.2 MPa for Control rubber Sample A and Experimental rubber Sample C. Therefore, Experimental rubber Sample B is expected to provide an advantage of a greater predictive wet grip performance over Control rubber Sample A at the higher ambient temperatures but lose that advantage at lower ambient temperatures, while Experimental rubber Sample C, which contains the soybean oil extended SSBR elastomer, maintained an improved balance of predictive wet grip performance over a wider range of ambient temperatures as compared to both of Control rubber Sample A and Experimental rubber Sample B, even at lower ambient temperatures.

From Example I it is concluded that Experimental rubber Sample C, containing the soybean oil extended SSBR, was discovered to demonstrate the beneficially best balance of providing wet grip performance at both high and low ambient temperatures and represents a significant discovery.

### EXAMPLE II

Pneumatic rubber tires of size 205/55R16 were prepared with treads of rubber Samples A, B and C of Example I, identified in this Example II as Tires A, B and C, respectively, and evaluated for their comparative breaking performance on a vehicle as a measure of their road traction. The tire rolling resistance for the tires was evaluated in a dynamic test laboratory wheel. The test values for the tires having a tread of Control rubber Sample A are normalized to a value of 100 and the test values for tires with treads of Experimental rubber Samples B and C are reported relative to the normalized values for the tire with tread of Control rubber Sample A.

Dry braking relates to stopping distance for the tires on dry pavement.

The term "ABS" rating means the normalized stopping distance values on a car equipped with anti-lock braking system relative to the normalized stopping distance for the tire with the tread of Formulation A. Higher ratings are better ratings for the tire (e.g. shorter stopping distance).

The term "wet high mu ABS rating" relates to ABS braking on a high mu asphalt surface (e.g. an asphalt surface displaying a low coefficient of friction).

The term "wet low mu ABS rating" relates ABS braking on a low mu asphalt surface (e.g. a smooth wet asphalt surface displaying a low coefficient of friction).

The term "rolling resistance rating" relates to the rolling resistance coefficient as determined by the ISO28580:2009 laboratory test. Higher ratings represent beneficially better ratings for the tire (e.g. lower rolling resistance coefficient).

The tire test results are summarized in Table 4.

**Table 4**

| Tire Test Results Ambient | Atmospheric Temperature | Tires | | |
|---|---|---|---|---|
| | | A | B | C |
| Dry braking ABS rating | 22 - 22°C | 100 | 101 | 102 |
| Wet high mu ABS rating | 22 - 25°C | 100 | 103 | 108 |
| Wet low mu ABS rating | 21 - 23°C | 100 | 106 | 107 |
| Wet high mu ABS rating | 11 - 12°C | 100 | 97 | 100 |
| Wet low mu ABS rating (higher is better for predictive better tread traction & shorter vehicular stopping distance) | 13°C | 100 | 97 | 101 |
| Rolling resistance rating (higher is better for predictive beneficially reduced tire rolling resistance) | Laboratory Test | 100 | 94 | 98 |

From Table 4, at ambient testing temperatures in range of from 22°C to 25°C, it can be seen that the traction (grip) property for the tire with the Experimental rubber Sample B tread is improved as compared to the tire with Control rubber Sample A tread as illustrated by a beneficial increase in wet braking performance of 103 and 106, respectively, at an ambient temperature of 21 °C to 25°C. Relative to the tire with the Control rubber Sample A tread composition, the tire with Experimental rubber Sample B tread contains a combination of an SSBR with higher Tg and higher precipitated silica reinforcing filler content.

However, at comparatively lower ambient testing temperatures in a range of from 10°C to 13°C, the wet braking performance of the tire with Experimental rubber Sample B tread is inferior to the tire with Control rubber Sample A tread as evidenced by a comparative wet braking performance of 97. This can be understood to be a consequence of the higher stiffness of Experimental rubber Sample B at the lower temperature due to its higher Tg promoted by the increased content of the high Tg SSBR.

This is considered as being significant in that it is desirable to achieve improved tire breaking performance at higher ambient temperatures while at least substantially maintaining the tire breaking performance at lower ambient temperatures.

Such desired properties were achieved by the tire with Experimental rubber Sample C rubber composition where an SSBR with an increased Tg (a higher compositional Tg) was used in combination with a reduced Tg of the rubber composition of Experimental rubber Sample C. The reduced compositional Tg of the Experimental rubber Sample C was achieved by soybean oil extending, instead of petroleum oil extending, the high Tg SSBR elastomer.

From such tire tests it is concluded that the tire with a tread of rubber composition of Experimental rubber Sample C, compared with treads rubber compositions of Control rubber Sample A and Experimental rubber Sample B provided the best balance of providing wet grip performance at both high and low ambient temperatures.

## Claims

1. A rubber composition comprising, based on parts by weight per 100 parts by weight elastomer (phr):
(A) one or more conjugated diene-based elastomers comprising:
(1) from 75 to 100 phr of at least one styrene/butadiene elastomer (SSBR) pre-extended with a vegetable triglyceride oil, wherein said at least one SSBR has a Tg in a range of from -20°C to +10°C and a bound styrene content in a range of from 25 to 50 percent,
(2) from zero to 25 phr of at least one additional conjugated diene-based elastomer comprising at least one of polybutadiene, cis 1,4-polyisoprene rubber and a further styrene/butadiene elastomer different from said at least one SSBR;
(B) from 80 to 200 phr of a reinforcing filler comprising a combination of carbon black and silica, wherein the reinforcing filler comprises of from 50 to 100 weight percent of silica, wherein the reinforcing filler further contains a silica coupler for the silica having a moiety reactive with hydroxyl groups on the silica and another different moiety interactive with said one or more diene-based elastomers; and
(C) from 10 to 70 phr of a resin comprising at least one of styrene/alphamethylstyrene copolymer resin, terpene-phenol resin, coumarone-indene resin, petroleum hydrocarbon resin, terpene polymer resin, rosin derived resin, rosin acid resin, and modified rosin acid resin.

2. The rubber composition of claim 1 wherein the resin is or comprises styrene/alphamethylstyrene copolymer resin.

3. The rubber composition of claim 1 or 2 wherein the rubber composition comprises from 80 to 95 phr of said at least one styrene/butadiene elastomer (SSBR) pre-extended with a vegetable triglyceride oil, and from 5 phr to 20 phr of said at least one additional diene-based elastomer, preferably polybutadiene or cis 1,4-polyisoprene rubber.

4. The rubber composition of at least one of the previous claims wherein said at least one SSBR has a Tg in a range of from -20°C to -8°C and a bound styrene content in a range of from 30 to 40 percent.

5. The rubber composition of at least one of the previous claims wherein said at least one SSBR is pre-extended with 5 to 40 parts by weight vegetable triglyceride oil per 100 parts by weight of the SSBR, alternatively 12 to 24 parts by weight vegetable triglyceride oil per 100 parts by weight of the SSBR.

6. The rubber composition of at least one of the previous claims wherein the SSBR has a vinyl 1 ,2-content in a range of from 10 to 80 percent based on butadiene content.

7. The rubber composition of at least one of the previous claims wherein the silica coupler comprises bis(3-triethoxysilylpropyl) polysulfide having an average of connection sulfur atoms in its polysulfide bridge in a range of from 2 to 4 sulfur atoms, an organoalkoxymercaptosilane or a combination thereof.

8. The rubber composition of at least one of the previous claims wherein the silica is pre-treated with at least one of said silica couplers.

9. The rubber composition of at least one of the previous claims further containing from zero to 20 phr, alternatively from 5 to 20 phr, of freely added petroleum based rubber processing oil.

10. The rubber composition of at least one of the previous claims further containing from 0 to 10 phr, alternatively from 2 to 8 phr, of phenol formaldehyde resin.

11. The rubber composition of at least one of the previous claims wherein said resin comprises styrene/alphamethylstyrene resin and terpene-phenol resin.

12. The rubber composition of at least one of the previous claims wherein the triglyceride vegetable oil comprises at least one of sunflower oil, rapeseed oil, canola oil, palm oil and soybean oil.

13. The rubber composition of at least one of the previous claims wherein said SSBR is an end-functionalized styrene/butadiene elastomer with functional groups reactive with hydroxyl groups on said silica comprising at least one of alkoxy, amine, siloxy and thiol groups; and/or wherein said SSBR is tin or silicon coupled.

14. The rubber composition of at least one of the previous claims wherein said SSBR has a vinyl 1,2-content in a range of 10 to 80 based on its butadiene content and wherein said rubber composition contains up to 20 phr of freely added petroleum based rubber processing oil and up to 10 phr of phenol formaldehyde resin.

15. A pneumatic tire comprising the rubber composition in accordance with at least one of the previous claims, preferably in the tread of the tire.

## Patentansprüche

1. Kautschukzusammensetzung, die basierend auf Gewichtsteilen pro 100 Gewichtsteilen Elastomer (phr) Folgendes umfasst:
(A) ein oder mehrere konjugierte Elastomere auf Dienbasis, die Folgendes umfassen:
(1) von 75 bis 100 phr wenigstens eines Styrol/Butadien-Elastomers (*solution styrene-butadiene rubber-* SSBR), das mit einem pflanzlichen Triglyceridöl vorverlängert ist, wobei das wenigstens eine SSBR eine Tg in einem Bereich von -20 ºC bis +10 ºC und einen gebundenen Styrolgehalt in einem Bereich von 25 bis 50 Prozent aufweist,
(2) von null bis 25 phr wenigstens eines zusätzlichen konjugierten Elastomers auf Dienbasis, das Polybutadien, cis-1,4-Polyisoprenkautschuk und/oder ein weiteres Styrol/Butadien-Elastomer umfasst, das sich von dem wenigstens einen SSBR unterscheidet;
(B) von 80 bis 200 phr eines verstärkenden Füllstoffs, der eine Kombination aus Industrieruß und Siliciumdioxid umfasst, wobei der verstärkende Füllstoff von 50 bis 100 Gewichtsprozent Siliciumdioxid umfasst, wobei der verstärkende Füllstoff ferner einen Siliciumdioxidkuppler für das Siliciumdioxid enthält, der ein Molekülteil, der mit Hydroxylgruppen an dem Siliciumdioxid reaktiv ist, und einen weiteren unterschiedlichen Molekülteil aufweist, der mit dem einen oder den mehreren Elastomeren auf Dienbasis wechselwirkt; und
(C) von 10 bis 70 phr eines Harzes, das Styrol/Alphamethylstyrol-Copolymerharz, Terpenphenolharz, Cumaronindenharz, Erdölkohlenwasserstoffharz, Terpenpolymerharz, Kolophonium abgeleitetes Harz, Kolophoniumsäureharz und/oder modifiziertes Kolophoniumsäureharz umfasst.

2. Kautschukzusammensetzung nach Anspruch 1, wobei das Harz ein Styrol/Alphamethylstyrol-Copolymerharz ist oder umfasst.

3. Kautschukzusammensetzung nach Anspruch 1 oder 2, wobei die Kautschukzusammensetzung von 80 bis 95 phr des wenigstens einen Styrol/Butadien-Elastomers (SSBR), das mit einem pflanzlichen Triglyceridöl vorverlängert ist, und von 5 phr bis 20 phr des wenigstens einen zusätzlichen Elastomers auf Dienbasis, vorzugsweise Polybutadien oder cis-1,4-Polyisoprenkautschuk, umfasst.

4. Kautschukzusammensetzung nach wenigstens einem der vorhergehenden Ansprüche, wobei das wenigstens eine SSBR eine Tg in einem Bereich von -20 ºC bis -8 ºC und einen gebundenen Styrolgehalt in einem Bereich von 30 bis 40 Prozent aufweist.

5. Kautschukzusammensetzung nach wenigstens einem der vorhergehenden Ansprüche, wobei das wenigstens eine SSBR mit 5 bis 40 Gewichtsteilen pflanzlichen Triglyceridöls pro 100 Gewichtsteilen SSBR, alternativ 12 bis 24 Gewichtsteilen pflanzlichen Triglyceridöls pro 100 Gewichtsteilen SSBR, vorverlängert ist.

6. Kautschukzusammensetzung nach wenigstens einem der vorhergehenden Ansprüche, wobei das SSBR einen Vinyl-1,2-Gehalt in einem Bereich von 10 bis 80 Prozent basierend auf dem Butadiengehalt aufweist.

7. Kautschukzusammensetzung nach wenigstens einem der vorhergehenden Ansprüche, wobei der Siliciumdioxidkuppler Bis(3-triethoxysilylpropyl)polysulfid, das einen Durchschnitt von Verbindungsschwefelatomen in seiner Polysulfidbrücke in einem Bereich von 2 bis 4 Schwefelatomen aufweist, ein Organoalkoxymercaptosilan oder eine Kombination davon umfasst.

8. Kautschukzusammensetzung nach wenigstens einem der vorhergehenden Ansprüche, wobei das Siliciumdioxid mit wenigstens einem der Siliciumdioxidkuppler vorbehandelt ist.

9. Kautschukzusammensetzung nach wenigstens einem der vorhergehenden Ansprüche, die ferner von null bis 20 phr, alternativ von 5 bis 20 phr, frei zugesetztes Kautschukverarbeitungsöl auf Erdölbasis enthält.

10. Kautschukzusammensetzung nach wenigstens einem der vorhergehenden Ansprüche, die ferner von 0 bis 10 phr, alternativ von 2 bis 8 phr, Phenolformaldehydharz enthält.

11. Kautschukzusammensetzung nach wenigstens einem der vorhergehenden Ansprüche, wobei das Harz Styrol/Alphamethylstyrolharz und Terpenphenolharz umfasst.

12. Kautschukzusammensetzung nach wenigstens einem der vorhergehenden Ansprüche, wobei das pflanzliche Triglyceridöl Sonnenblumenöl, Rapsöl, Canolaöl, Palmöl und/oder Sojaöl umfasst.

13. Kautschukzusammensetzung nach wenigstens einem der vorhergehenden Ansprüche, wobei das SSBR ein endfunktionalisiertes Styrol/Butadien-Elastomer mit funktionellen Gruppen ist, die mit Hydroxylgruppen an dem Siliciumdioxid reaktiv sind und Alkoxy-, Amin-, Siloxy- und Thiolgruppen umfassen; und/oder
wobei das SSBR mit Zinn oder Silizium gekoppelt ist.

14. Kautschukzusammensetzung nach wenigstens einem der vorhergehenden Ansprüche, wobei das SSBR einen Vinyl-1,2-Gehalt in einem Bereich von 10 bis 80 basierend auf seinem Butadiengehalt aufweist und wobei die Kautschukzusammensetzung bis zu 20 phr frei zugesetztes Kautschukverarbeitungsöl auf Erdölbasis und bis zu 10 phr Phenolformaldehydharz enthält.

15. Luftreifen, der die Kautschukzusammensetzung nach wenigstens einem der vorhergehenden Ansprüche, vorzugsweise in der Lauffläche des Reifens, umfasst.

## Revendications

1. Composition de caoutchouc qui comprend, en se basant sur des parties en poids par 100 parties en poids d'élastomère (phr) :
(A) un ou plusieurs élastomères à base de diènes conjugués, qui comprennent :
(1) de 75 à 100 phr d'au moins un élastomère de styrène/butadiène (SSBR) allongé au préalable avec une huile végétale à base de triglycérides ; dans laquelle ledit au moins un SSBR possède une valeur Tg qui se situe dans une plage de - 20 °C à +10 °C et une teneur en styrène lié qui se situe dans une plage de 25 à 50 % ;
(2) de zéro à 25 phr d'au moins un élastomère supplémentaire à base d'un diène conjugué comprenant au moins un élastomère choisi parmi le polybutadiène, le caoutchouc de cis 1,4-polyisoprène et un élastomère supplémentaire de styrène/butadiène qui est différent dudit au moins un SSBR ;
(B) de 80 à 200 phr d'une matière de charge pour le renforcement qui comprend une combinaison de noir de carbone et de silice ; dans laquelle la matière de charge pour le renforcement comprend de 50 à 100 % en poids de silice ; dans laquelle la matière de charge pour le renforcement contient en outre un agent de couplage pour la silice qui possède une fraction apte à réagir avec des groupes hydroxyle sur la silice et une autre fraction différente qui entre en interaction avec lesdits un ou plusieurs élastomères à base diénique ; et
(C) de 10 à 70 phr d'une résine qui comprend au moins une résine choisie parmi une résine de copolymère de styrène/alphaméthylstyrène, une résine terpénique-phénolique, une résine de coumarone-indène, une résine d'hydrocarbure de pétrole, une résine polymère terpénique, une résine qui dérive de la colophane, une résine d'acide résinique et une résine d'acide résinique modifiée.

2. Composition de caoutchouc selon la revendication 1, dans laquelle la résine représente ou comprend une résine de copolymère de styrène/alphaméthylstyrène.

3. Composition de caoutchouc selon la revendication 1 ou 2, dans laquelle la composition de caoutchouc comprend de 80 à 95 phr dudit au moins un élastomère de styrène/butadiène (SSBR) allongé au préalable avec une huile végétale à base de triglycérides et de 5 phr à 20 phr dudit au moins un élastomère supplémentaire à base diénique, de préférence du polybutadiène ou du caoutchouc de cis 1,4-polyisoprène.

4. Composition de caoutchouc selon au moins une des revendications précédentes, dans laquelle ledit au moins un SSBR possède une valeurTg qui se situe dans une plage de -20 °C à -8 °C et une teneur en styrène lié qui se situe dans une plage de 30 à 40 %.

5. Composition de caoutchouc selon au moins une des revendications précédentes, dans laquelle ledit au moins un SSBR est soumis à un allongement préalable avec une quantité de 5 à 40 parties en poids d'une huile végétale à base de triglycérides par 100 parties en poids du SSBR, en variante de 12 à 14 parties en poids d'une huile végétale à base de triglycérides par 100 parties en poids du SSBR.

6. Composition de caoutchouc selon au moins une des revendications précédentes, dans laquelle le SSBR possède une teneur en groupe 1,2-vinyle qui se situe dans une plage de 10 à 80 % en se basant sur la teneur en butadiène.

7. Composition de caoutchouc selon au moins une des revendications précédentes, dans laquelle l'agent de couplage pour la silice comprend un bis(3-triéthoxysilylpropyl) polysulfure qui possède en moyenne un nombre d'atomes de soufre de liaison dans son pont polysulfure qui se situe dans une plage de 2 à 4 atomes de soufre, un organoalcoxymercaptosilane ou une de leurs combinaisons.

8. Composition de caoutchouc selon au moins une des revendications précédentes, dans laquelle la silice a fait l'objet d'un prétraitement avec au moins un desdits agents de couplage pour la silice.

9. Composition de caoutchouc selon au moins une des revendications précédentes, qui contient en outre de zéro à 20 phr, en variante de 5 à 20 phr, d'une huile de traitement du caoutchouc à base de pétrole librement ajouté.

10. Composition de caoutchouc selon au moins une des revendications précédentes, qui contient en outre de zéro à 10 phr, en variante de 2 à 8 phr, d'une résine de phénol formaldéhyde.

11. Composition de caoutchouc selon au moins une des revendications précédentes, dans laquelle ladite résine comprend une résine de styrène/alphaméthylstyrène et une résine terpénique-phénolique.

12. Composition de caoutchouc selon au moins une des revendications précédentes, dans laquelle l'huile végétale à base de triglycérides comprend au moins une huile choisie parmi l'huile de tournesol, l'huile de colza, l'huile de canola, l'huile de palme et d'huile de soja.

13. Composition de caoutchouc selon au moins une des revendications précédentes, dans laquelle ledit SSBR représente un élastomère de styrène-butadiène du type à extrémité fonctionnalisée qui comprend des groupes fonctionnels aptes à réagir avec des groupes hydroxyle sur ladite silice, qui comprennent au moins un groupe choisi parmi un groupe alcoxy, un groupe amine, un groupe siloxy et un groupe thiol ; et/ou dans laquelle ledit SSBR est couplé à de l'étain ou à du silicium.

14. Composition de caoutchouc selon au moins une des revendications précédentes, dans laquelle ledit SSBR possède une teneur en groupe 1,2-vinyle qui se situe dans une plage de 10 à 80 % en se basant sur sa teneur en butadiène ; et dans laquelle ladite composition de caoutchouc contient jusqu'à 20 phr d'une huile de traitement du caoutchouc à base de pétrole librement ajouté et jusqu'à 10 phr d'une résine de phénol formaldéhyde.

15. Bandage pneumatique qui comprend la composition de caoutchouc conformément à au moins une des revendications précédentes, de préférence dans la bande de roulement du bandage pneumatique.
